# FASCICULE DE BREVET EUROPEEN

(11) **EP 3 959 097 B1**
(45) Date de publication et mention de la délivrance du brevet: **29.03.2023**
(21) Numéro de dépôt: 20719203.0
(22) Date de dépôt: 20.04.2020
(51) Int. Cl.: B60K 11/04

(54) **ENSEMBLE DE REFROIDISSEMENT POUR UN VÉHICULE AUTOMOBILE**
KÜHLUNGSBAUGRUPPE FÜR EIN KRAFTFAHRZEUG
COOLING ASSEMBLY FOR A MOTOR VEHICLE

(30) Priorité: 26.04.2019 FR 1904424
(43) Date de publication de la demande: 02.03.2022
(73) Titulaire: VALEO SYSTEMES THERMIQUES, 78320 Le Mesnil Saint-Denis (FR)
(72) Inventeur: BIREAUD, Fabien, 78322 LE MESNIL SAINT-DENIS CEDEX (FR); TRINDADE, José, 78322 LE MESNIL SAINT-DENIS CEDEX (FR); TOURNOIS, Rémi, 78322 LE MESNIL SAINT-DENIS CEDEX (FR)
(74) Mandataire: Valeo Systèmes Thermiques
(86) Numéro de dépôt international: PCT/EP2020/061034
(87) Numéro de publication internationale: WO 2020/216727

(56) Documents cités:
- EP-A1- 2 896 529
- EP-A2- 2 333 266
- FR-A1- 3 035 955
- FR-A1- 3 041 421
- FR-A1- 3 063 338

## Description

La présente invention concerne le domaine des systèmes de refroidissement destinés aux véhicules automobiles, et plus particulièrement elle concerne les systèmes de refroidissement destinés à être installés en face avant de véhicules automobiles.

Un véhicule automobile comprend, de façon connue, des systèmes de refroidissement destinés au refroidissement du moteur thermique ou au refroidissement des batteries s'il s'agit d'un véhicule électrique, et également à la régulation thermique de l'habitacle du véhicule pour le confort des passagers.

De tels systèmes de refroidissement comprennent classiquement au moins deux échangeurs thermiques agencés sur un circuit de fluide réfrigérant, chaque échangeur thermique étant configuré pour permettre un échange de calories entre le fluide caloporteur qui y circule et un flux d'air qui le traverse. Ce flux d'air peut par exemple être généré par un groupe moto-ventilateur et/ou par un déplacement du véhicule. Il est connu de positionner le système de refroidissement concerné, ou à tout le moins au moins les échangeurs thermiques de ce système de refroidissement, dans une face avant du véhicule, de sorte que l'air qui parvient jusqu'à ces échangeurs thermiques, provenant à l'origine de l'extérieur du véhicule, soit le plus frais possible. Une ouverture est ménagée dans la face avant, notamment dans la calandre du véhicule, pour que de l'air frais provenant de l'extérieur du véhicule puisse pénétrer dans la face avant et venir traverser le système de refroidissement.

Il est notamment connu de disposer les échangeurs dans un cadre de support qui permet d'assurer la position souhaitée des échangeurs par rapport à la face avant et les uns par rapport aux autres, notamment dans une position d'empilement longitudinal avec un premier échangeur de chaleur disposé en amont d'un deuxième échangeur de chaleur relativement au sens de circulation du flux d'air entrant dans le système de refroidissement.

Un inconvénient de ce positionnement en face avant réside dans le fait que des projections, par exemples de gravillons, peuvent endommager les échangeurs thermiques, et notamment le premier d'entre eux, c'est-à-dire l'échangeur thermique du système de refroidissement agencé le plus proche d'une extrémité avant du véhicule. Il est ainsi connu de fixer une grille de protection sur le premier échangeur thermique afin de le protéger contre ces éventuelles projections, ce premier échangeur thermique permettant quant à lui de protéger, de ces projections, les échangeurs thermiques empilés derrière lui le long de la direction de déplacement principal du véhicule. Toutefois, afin d'assurer une arrivée, au moins partielle, d'air frais, c'est-à-dire d'air n'ayant jamais traversé aucun échangeur thermique, à la fois pour le premier échangeur thermique et pour le deuxième échangeur thermique, on peut prévoir que le deuxième échangeur thermique soit décalé par rapport au premier échangeur thermique de sorte qu'une portion de ce deuxième échangeur thermique n'est plus protégée par le premier échangeur thermique. Dès lors, il existe un risque que cette portion du deuxième échangeur thermique soit endommagée, ce qui n'est pas souhaitable.

Les documents EP 2 896 529 A1, FR 3 063 338 A1, EP 2 333 266 A2 et FR 3 041 421 A1 décrivent des ensembles de refroidissement connus.

La présente invention s'inscrit dans ce contexte et vise à résoudre au moins l'inconvénient cité en proposant un ensemble de refroidissement pour un véhicule automobile, comprenant au moins un premier échangeur thermique s'étendant principalement dans un premier plan, au moins un deuxième échangeur thermique s'étendant principalement dans un deuxième plan et au moins une grille de protection du deuxième échangeur thermique, le premier échangeur thermique et/ou le deuxième échangeur thermique étant portés par un cadre. Selon l'invention, l'au moins une grille de protection du deuxième échangeur thermique forme une pièce monobloc avec le cadre. Autrement dit, la grille de protection du deuxième échangeur thermique et le cadre forment un unique ensemble qui ne peut être séparé sans entraîner la détérioration de la grille de protection ou du cadre. Par exemple, la grille de protection du deuxième échangeur thermique et le cadre peuvent être issus de matière, ou réalisés grâce à un système bi-injection.

Selon l'invention, le premier échangeur thermique et le deuxième échangeur thermique présentent une structure similaire, voire identique. En tout état de cause, le premier échangeur thermique et le deuxième échangeur thermique comprennent, chacun, au moins une zone d'échange de chaleur qui comprend un empilement de tubes ou de plaques à travers lesquels circule un fluide capable d'échanger ou de transporter des calories. Cette zone d'échange de chaleur est par ailleurs bordée par deux boîtes collectrices qui sont configurées pour permettre l'entrée, la sortie et/ou une répartition homogène du fluide dans la zone d'échange de chaleur.

Selon une caractéristique de la présente invention, le premier échangeur thermique et le deuxième échangeur thermique sont tous deux traversés par un même flux d'air, le premier échangeur thermique étant agencé en amont du deuxième échangeur thermique par rapport à un sens de circulation de ce flux d'air, au moins une portion du deuxième échangeur thermique s'étend au-delà du premier échangeur thermique dans le deuxième plan d'extension principal du deuxième échangeur thermique. En d'autres termes, on comprend que le premier échangeur thermique est traversé par de l'air frais sur l'ensemble de sa surface tandis que le deuxième échangeur thermique est traversé par de l'air frais uniquement au niveau de sa portion qui s'étend au-delà du premier échangeur thermique, le reste du deuxième échangeur thermique étant traversé par de l'air ayant préalablement traversé le premier échangeur thermique, c'est-à-dire de l'air au moins partiellement réchauffé.

Selon l'invention, la grille de protection du deuxième échangeur thermique s'étend en regard de la portion du deuxième échangeur thermique qui s'étend au-delà du premier échangeur thermique. Autrement dit, cette grille de protection est agencée de sorte à protéger la portion de ce deuxième échangeur thermique qui s'étend au-delà du premier échangeur thermique contre d'éventuelles projections, telles que des projections de gravillons qui pourraient endommager cette portion du deuxième échangeur thermique. Ainsi, une partie du deuxième échangeur thermique est protégée par le premier échangeur thermique et une autre partie de ce deuxième échangeur thermique, plus particulièrement la portion de ce deuxième échangeur thermique qui s'étend au-delà du premier échangeur thermique, est quant à elle protégée par la grille de protection.

Avantageusement, la grille de protection présente des dimensions au moins identiques aux dimensions de la portion du deuxième échangeur thermique qui s'étend au-delà du premier échangeur thermique. On comprend que cela permet de protéger la totalité de cette portion du deuxième échangeur thermique, l'autre portion de ce deuxième échangeur thermique étant protégée par le premier échangeur thermique tel qu'évoqué ci-dessus.

Tel que précédemment évoqué, le deuxième échangeur thermique comprend une zone d'échange de chaleur formée par un empilement de tubes ou de plaques, cette zone d'échange de chaleur étant configurée pour être traversée par le flux d'air. Selon une caractéristique de la présente invention, la grille de protection comprend une pluralité de barreaux qui s'étendent, chacun, en regard de l'un de ces tubes ou de l'une de ces plaques de la zone d'échange de chaleur du deuxième échangeur thermique. Avantageusement, chaque barreau est agencé en amont de l'un des tubes/plaques par rapport au sens de circulation du flux d'air et une dimension, la plus longue, de chaque barreau est au moins identique à une dimension, la plus longue, de chaque tube ou plaque de la zone d'échange de chaleur du deuxième échangeur thermique. En d'autres termes, chaque barreau de la grille de protection est destiné à protéger l'un des tubes ou l'une des plaques de la zone d'échange de chaleur du deuxième échangeur thermique.

Selon un exemple de réalisation de la présente invention, le cadre peut comprendre au moins un moyen de fixation configuré pour permettre la fixation d'un conduit d'air ménagé entre une face avant du véhicule destiné à recevoir l'ensemble de refroidissement et le premier échangeur thermique. Plus particulièrement, ce conduit d'air s'étend alors entre une ouverture ménagée dans la face avant du véhicule, de sorte à communiquer avec un environnement extérieur au véhicule, et le premier échangeur thermique. On comprend que c'est grâce à ce conduit d'air que le flux d'air peut rejoindre le premier et le deuxième échangeur thermique. Plus précisément, l'au moins un moyen de fixation est configuré pour permettre la fixation d'une extrémité de ce conduit d'air par laquelle le flux d'air rejoint le premier et le deuxième échangeur thermique.

Optionnellement, l'ensemble de refroidissement selon l'invention comprend au moins un moyen de protection du premier échangeur thermique. Selon l'invention, cet au moins un moyen de protection du premier échangeur thermique peut prendre la forme d'une autre grille. Alternativement, les tubes ou les plaques du premier échangeur thermique, et plus particulièrement les tubes ou les plaques qui participent à former la zone d'échange de chaleur du premier échangeur thermique peuvent être renforcés de sorte à être rendus plus résistants.

Avantageusement, une première partie du premier échangeur thermique peut être protégée par le conduit d'air, une deuxième partie du premier échangeur thermique étant alors protégée par l'au moins un moyen de protection du premier échangeur thermique. Afin d'assurer sa fonction de protection, le conduit d'air présente, dans l'ordre selon le sens de circulation du flux d'air, une section d'entrée prolongée par un évasement progressif réalisé en direction du premier échangeur thermique. Avantageusement, cette forme particulière du conduit d'air permet de bloquer au moins une partie des éventuelles projections de gravillons, tout en assurant une alimentation continue par le flux d'air. Autrement dit, on comprend que seule une partie des tubes/plaques est renforcée ou que la grille de protection ne s'étend pas sur toute la hauteur du premier échangeur thermique, le terme « hauteur » s'entendant comme une dimension du premier échangeur thermique mesurée perpendiculairement à la route sur laquelle se déplace le véhicule auquel est destiné l'ensemble de refroidissement selon l'invention.

Selon une caractéristique de la présente invention, le cadre comprend au moins une zone centrale qui s'étend dans un troisième plan parallèle au premier plan d'extension principale du premier échangeur thermique et au deuxième plan d'extension principal du deuxième échangeur thermique, la grille de protection du deuxième échangeur thermique formant une partie de cette zone centrale.

Le cadre peut comprendre au moins une première patte de fixation configurée pour permettre la fixation du premier échangeur thermique et au moins une deuxième patte de fixation configurée pour permettre la fixation du deuxième échangeur thermique, l'au moins une première patte de fixation et l'au moins une deuxième patte de fixation étant réparties de part et d'autre de la zone centrale du cadre. En d'autres termes, la zone centrale participe à définir un premier côté du cadre dans lequel est fixé le premier échangeur thermique et un deuxième côté du cadre dans lequel est fixé le deuxième échangeur thermique, la zone centrale du cadre étant ainsi interposée entre le premier échangeur thermique et le deuxième échangeur thermique.

Selon l'invention, la zone centrale du cadre peut comprendre au moins deux renforts, le premier échangeur thermique et le deuxième échangeur thermique étant tous deux agencés en regard de ces renforts. On comprend que le premier échangeur thermique est alors agencé en regard d'une première face de ces renforts et que le deuxième échangeur thermique est quant à lui agencé en regard d'une deuxième face de ces renforts, les premières faces de ces renforts étant tournées vers le premier côté du cadre et les deuxièmes faces de ces renforts étant tournées vers le deuxième côté du cadre.

Optionnellement on pourra prévoir que le premier échangeur thermique et le deuxième échangeur thermique soient agencés en appui contre ces renforts. Selon cette alternative, le premier échangeur thermique est alors en appui sur les premières faces de ces renforts et le deuxième échangeur thermique est quant à lui en appui sur les deuxièmes faces de ces renforts.

Selon un exemple de réalisation de la présente invention, le cadre comprend au moins deux montants verticaux parallèles entre eux et au moins deux montants horizontaux parallèles entre eux et perpendiculaires aux montants verticaux. Selon cet exemple de réalisation, la grille de protection du deuxième échangeur thermique s'étend depuis l'un des montants verticaux, jusqu'à l'autre. Avantageusement, selon cet exemple de réalisation, la grille de protection du deuxième échangeur thermique est une grille horizontale, qui s'étend parallèlement aux montants horizontaux du cadre. Toujours selon cet exemple de réalisation, les deux renforts du cadre sont des renforts verticaux, c'est-à-dire qu'ils s'étendent parallèlement aux montants verticaux du cadre et ainsi perpendiculairement à la grille de protection du deuxième échangeur thermique.

Selon l'invention, la grille de protection du deuxième échangeur thermique, le cadre et les deux renforts peuvent former un ensemble monobloc, c'est-à-dire un unique ensemble qui ne peut être séparé sans entraîner la détérioration de la grille de protection du deuxième échangeur thermique, du cadre ou des renforts. Autrement dit, on observe une continuité de matière entre la grille de protection du deuxième échangeur thermique et les renforts du cadre.

La présente invention concerne également un véhicule automobile comprenant au moins une face avant et au moins un ensemble de refroidissement selon l'invention, l'ensemble de refroidissement étant agencé dans la face avant du véhicule.

D'autres caractéristiques, détails et avantages ressortiront plus clairement à la lecture de la description détaillée donnée ci-après, à titre indicatif, en relation avec les différents exemples de réalisation illustrés sur les figures suivantes :
[Fig.1] illustre schématiquement, vu selon une coupe longitudinale, une face avant d'un véhicule dans laquelle est intégrée un ensemble de refroidissement selon l'invention ;
[Fig.2] illustre schématiquement un échangeur thermique de l'ensemble de refroidissement selon l'invention ;
[Fig.3] illustre schématiquement, vu en coupe longitudinale, l'ensemble de refroidissement selon la présente invention ;
[Fig.4] illustre, vu de face, un cadre de l'ensemble de refroidissement selon l'invention, sur lequel est destiné à être fixé au moins un échangeur thermique de l'ensemble de refroidissement.

Dans la suite de la description, les termes « amont » et « aval » se réfèrent à un sens de circulation d'un flux d'air qui entre dans un véhicule par sa face avant, par exemple lorsque ce véhicule se déplace en marche avant. Les coupes dîtes « longitudinales » sont des coupes réalisées selon un plan perpendiculaire à une route sur laquelle se déplace le véhicule dans lequel s'inscrit une direction D de déplacement principal du véhicule. Les termes « avant » et « arrière » se réfèrent quant à eux à une orientation du véhicule et désignent deux extrémités longitudinales de ce véhicule, l'avant du véhicule comprenant la face avant dans laquelle est intégrée un ensemble de refroidissement selon la présente invention. Enfin les termes « vertical » et « horizontal » s'entendent par rapport à la route sur laquelle se déplace le véhicule concerné, une direction horizontale étant parallèle à la route et une direction verticale étant perpendiculaire à cette route.

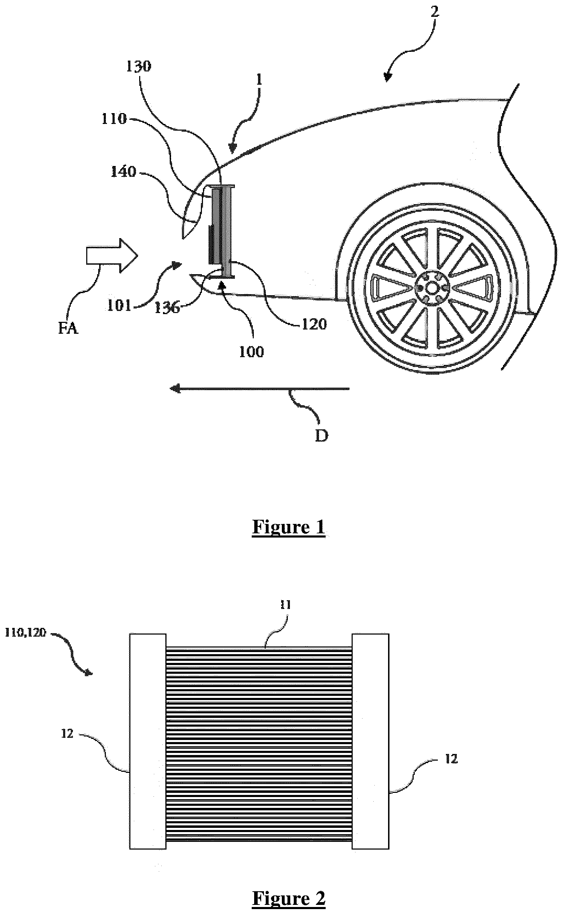

La figure 1 illustre, de façon schématique, selon une coupe longitudinale, une face avant 1 d'un véhicule automobile 2 dans laquelle est agencé un ensemble de refroidissement 100 selon la présente invention.

L'ensemble de refroidissement 100 comprend au moins un premier échangeur thermique 110, au moins un deuxième échangeur thermique 120, au moins un cadre 130 porteur du premier échangeur thermique 110 et du deuxième échangeur thermique 120, et au moins un conduit d'air 140 agencé entre une ouverture 101 ménagée dans la face avant 1 du véhicule 2 et le premier échangeur thermique 110 de l'ensemble de refroidissement 100.

Tel qu'illustré, le premier échangeur thermique 110 et le deuxième échangeur thermique 120 sont empilés, dans cet ordre, le long d'une direction D de déplacement principal de ce véhicule 2. Le premier échangeur thermique 110 et le deuxième échangeur thermique 120 sont par exemples agencés sur un circuit de distribution d'un fluide caloporteur ou d'un fluide réfrigérant. On entend par « fluide caloporteur » un fluide capable de transporter, capter et céder des calories et par « fluide réfrigérant » un fluide capable de capter et céder des calories en changeant d'état. Le premier échangeur thermique 110 et le deuxième échangeur thermique 120 sont par ailleurs configurés pour opérer un échange de chaleur entre ce fluide réfrigérant ou ce fluide caloporteur et un flux d'air FA qui entre dans le véhicule 2, ce flux d'air FA pouvant être généré par un déplacement du véhicule 2 et/ou par un organe de ventilation agencé en amont ou en aval du premier échangeur thermique 110 et du deuxième échangeur thermique 120. On note que, par rapport à un sens de circulation de ce flux d'air FA, le premier échangeur thermique 110 est agencé en amont du deuxième échangeur thermique 120. En d'autres termes, le premier échangeur thermique 110 n'est alimenté que par de l'air frais tandis que le deuxième échangeur thermique 120 est au moins partiellement alimenté par de l'air réchauffé, c'est-à-dire de l'air qui a déjà traversé le premier échangeur thermique 110 et donc échangé des calories avec le fluide qui y circule.

On comprend que l'ouverture 101 ménagée dans la face avant 1 du véhicule 2 permet au flux d'air FA d'entrer dans le véhicule 2. Optionnellement, cette ouverture 101 peut être munie de volets réglables qui permettent de réguler la quantité d'air qui entre dans le véhicule 2. Ainsi, en fonction des besoins en refroidissement du véhicule 2 à un instant donné, ces volets réglables sont plus ou moins ouverts, ou totalement fermés. On comprend alors que le conduit d'air 140 est agencé entre ces volets réglables et le premier échangeur thermique 110 et qu'il permet d'acheminer le flux d'air FA depuis un environnement extérieur au véhicule 2 jusqu'aux premier et deuxième échangeurs thermiques 110, 120.

L'ensemble de refroidissement 100 selon l'invention comprend également au moins une grille de protection 136 du deuxième échangeur thermique 120 qui, tel que cela sera plus amplement détaillé ci-dessous, permet de protéger ce deuxième échangeur thermique 120 d'éventuelles projections, par exemple des projections de gravillons présents sur la route sur laquelle se déplace le véhicule 2, qui pourraient pénétrer dans le véhicule 2 par l'ouverture 101 et endommager ce deuxième échangeur thermique 120.

Le premier échangeur thermique 110 et le deuxième échangeur thermique 120 présentent avantageusement des structures similaires. Un exemple de réalisation de ces premier et deuxième échangeurs thermiques 110, 120 est par exemple schématiquement représenté sur la figure 2. Ainsi, chacun de ces échangeurs thermiques 110, 120 comprend une zone d'échange de chaleur 11 formée d'un empilement de tubes ou de plaques dans ou à travers lesquels circule le fluide réfrigérant ou le fluide caloporteur. Cette zone d'échange de chaleur 11 est bordée d'au moins deux boîtes collectrices 12 qui permettent au fluide réfrigérant ou au fluide caloporteur de rejoindre et de quitter cette zone d'échange de chaleur 11. Avantageusement, au moins l'une de ces boîtes collectrices 12 est configurée pour permettre une répartition homogène du fluide à travers la zone d'échange de chaleur 11. Cette zone d'échange de chaleur 11 est en outre destinée à être traversée par le flux d'air qui entre dans le véhicule de sorte que c'est dans cette zone d'échange de chaleur 11 qui s'opère l'échange de calories entre le flux d'air et le fluide qui y circule. Selon l'exemple illustré ici, les boîtes collectrices 12 sont réparties à deux extrémités opposées de la zone d'échange de chaleur 11 mais il est entendu qu'il ne s'agit que d'un exemple de réalisation et que d'autres configurations sont envisageables sans sortir du contexte de la présente invention. Par exemple, on pourra prévoir que ces deux boîtes collectrices soient agencées à une même extrémité de la zone d'échange de chaleur, le fluide y circulant alors selon un circuit en forme de U.

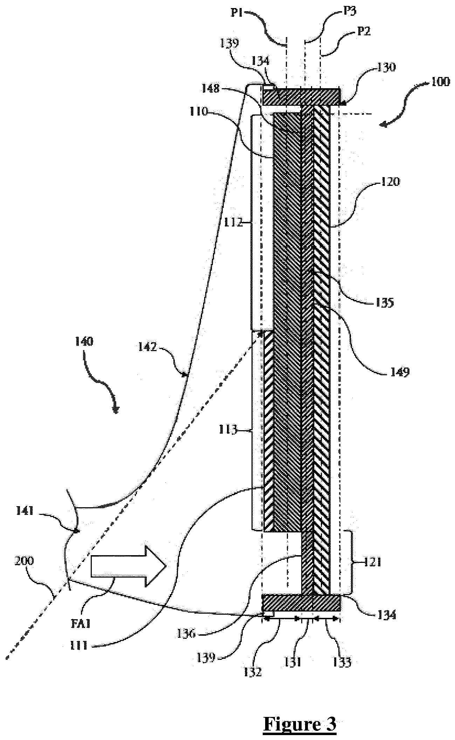

La figure 3 illustre de façon schématique, vu en coupe longitudinale, l'ensemble de refroidissement 100 selon un exemple de réalisation de la présente invention. Tel qu'illustré, le premier échangeur thermique 110 et le deuxième échangeur thermique 120 s'étendent respectivement dans un premier plan P1 et dans un deuxième plan P2 parallèles l'un par rapport à l'autre.

Tel que précédemment évoqué, on note que le cadre 130 porte à la fois le premier échangeur thermique 110 et le deuxième échangeur thermique 120. Plus précisément, le cadre 130 présente une zone centrale 131 qui s'étend principalement dans un troisième plan P3 parallèle au premier plan P1 d'extension principal du premier échangeur thermique 110 et au deuxième plan P2 d'extension principale du deuxième échangeur thermique 120 et qui délimite un premier côté 132 du cadre 130 dans lequel est fixé le premier échangeur thermique 110 et un deuxième côté 133 du cadre 130 dans lequel est fixé le deuxième échangeur thermique 120. Autrement dit, le premier échangeur thermique 110 et le deuxième échangeur thermique 120 sont répartis de part et d'autre de la zone centrale 131 du cadre 130, c'est-à-dire que cette zone centrale 131 est interposée entre le premier échangeur thermique 110 et le deuxième échangeur thermique 120.

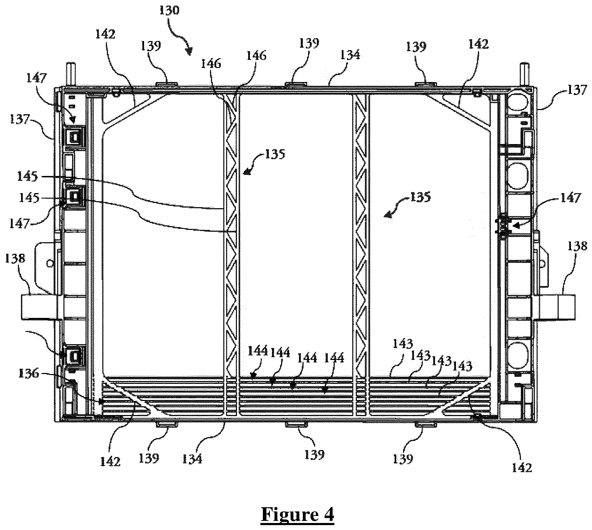

Le cadre 130 comprend par ailleurs au moins deux montants horizontaux 134 et au moins deux montants verticaux, par exemple visibles sur la figure 4, les deux montants horizontaux 134 étant parallèles entre eux et perpendiculaires aux deux montants verticaux, ces deux montants verticaux étant ainsi par ailleurs parallèles entre eux.

Le cadre 130 comprend également au moins deux renforts 135 - un seul d'entre eux étant visible sur la figure 3 - qui s'étendent d'un montant horizontal 134 à l'autre, perpendiculairement à ces montants horizontaux 134. On remarque, sur la figure 3, que ces renforts 135 sont plus particulièrement ménagés dans la zone centrale 131 de ce cadre 130. Selon l'invention, le premier échangeur thermique 110 est ainsi agencé en regard d'une première face 148 de ces renforts 135 et le deuxième échangeur thermique 120 est agencé en regard d'une deuxième face 149 de ces renforts 135, la première face 148 de chaque renfort 135 étant tournée vers le premier côté 132 du cadre 130 et la deuxième face 149 de ces renforts 135 étant quant à elle tournée vers le deuxième côté 133 de ce cadre 130. Optionnellement, le premier échangeur thermique peut être agencé en appui contre les premières faces 148 de chaque renfort 135 et le deuxième échangeur thermique peut quant à lui être agencé en appui contre les deuxièmes faces 149 de ces renforts 135.

Le cadre 130 porte en outre le conduit d'air 140, c'est-à-dire que le cadre 130, et plus particulièrement les montants horizontaux 134 de ce cadre 130 présentent, chacun, au moins un moyen de fixation 139 destiné à coopérer avec une extrémité du conduit d'air 140 de sorte à maintenir celui-ci en position.

On note également que le deuxième échangeur thermique 120 comprend au moins une portion 121 qui s'étend au-delà du premier échangeur thermique 110, dans le deuxième plan P2 dans lequel s'étend principalement le deuxième échangeur thermique 120. Selon l'exemple illustré ici, cette portion 121 du deuxième échangeur thermique 120 s'étend au-delà du premier échangeur thermique 110, vers le bas, c'est-à-dire en direction de la route lorsque l'ensemble de refroidissement 100 est intégré au véhicule, mais il est entendu qu'il ne s'agit que d'un exemple de réalisation de la présente invention et que la portion 121 du deuxième échangeur thermique 120 pourrait s'étendre dans n'importe quelle autre direction sans sortir du contexte de la présente invention à condition qu'elle s'étende dans le deuxième plan P2 d'extension principal de ce deuxième échangeur thermique 120. Avantageusement, cette portion 121 du deuxième échangeur thermique 120 est ainsi agencée pour permettre à ce deuxième échangeur thermique 120 d'être au moins partiellement alimenté en air frais, c'est-à-dire par une portion FA1 du flux d'air qui n'a encore traversé aucun autre échangeur thermique et qui n'a donc pas échangé de calories avec le fluide. Autrement dit, cette portion 121 du deuxième échangeur thermique 120 qui s'étend au-delà du premier échangeur thermique 110 permet d'augmenter un écart de température entre le fluide qui circule dans la zone d'échange de chaleur du deuxième échangeur thermique 120 et le flux d'air qui le traverse de sorte à améliorer le rendement de ce deuxième échangeur thermique 120.

Tel que mentionné ci-dessus, des gravillons ou autres éléments présents sur la route peuvent se retrouver projetés dans l'ensemble de refroidissement 100 et venir endommager le premier échangeur thermique 110 et/ou le deuxième échangeur thermique 120. Plus particulièrement, ces projections risquent d'endommager le premier échangeur thermique 110 et la portion 121 du deuxième échangeur thermique 120 qui s'étend au-delà du premier échangeur thermique 110. Selon l'invention, l'ensemble de refroidissement 100 comprend avantageusement au moins un moyen de protection 111 du premier échangeur thermique 110. Le deuxième échangeur thermique 120 étant empilé sur le premier échangeur thermique 110, on comprend que ce deuxième échangeur thermique 120 est partiellement protégé des projections par le premier échangeur thermique 110.

Afin de protéger la portion 121 du deuxième échangeur thermique 120 qui s'étend au-delà du premier échangeur thermique 110, l'ensemble de refroidissement 100 selon l'invention comprend une grille de protection 136 agencée en regard de cette portion 121 du deuxième échangeur thermique 120. Tel que cela sera plus amplement détaillé ci-après, cette grille de protection 136 forme un ensemble monobloc avec le cadre 130 porteur des échangeurs thermiques 110, 120, c'est-à-dire que le cadre 130 et la grille de protection 136 forment un unique ensemble qui ne peut être séparé sans entraîner la détérioration de la grille de protection 136 ou du cadre 130. Avantageusement, la grille de protection 136 présente des dimensions au moins identiques aux dimensions de la portion 121 du deuxième échangeur thermique 120 qui s'étend au-delà du premier échangeur thermique 110 de sorte que la totalité de cette portion 121 du deuxième échangeur thermique 120 soit efficacement protégée.

L'ensemble de refroidissement 100 selon l'invention comprend ainsi au moins un moyen de protection 111 du premier échangeur thermique 110. Selon l'exemple illustré sur la figure 3, ce moyen de protection 111 prend la forme d'une autre grille. Cette autre grille se distingue de la grille de protection 136 du deuxième échangeur thermique 120 notamment en ce qu'elle est réalisée distinctement et rapportée sur le cadre 130 ou directement sur le premier échangeur thermique 110. Autrement dit, le cadre 130 ou le premier échangeur thermique 110 comprend au moins un organe de fixation - non illustré ici - qui permet de fixer cette autre grille en regard du premier échangeur thermique 110 de sorte à protéger ce dernier des projections évoquées ci-dessus. Selon un exemple non illustré ici, le moyen de protection 111 du premier échangeur thermique 110 est formé par un renforcement des tubes ou des plaques qui forment la zone d'échange de chaleur de ce premier échangeur thermique 110.

Tel que représenté sur la figure 3, le conduit d'air 140 présente, dans cet ordre selon le sens de circulation du flux d'air, une section d'entrée 141 prolongée par un évasement 142 progressif en direction du premier échangeur thermique 110. Cette forme particulière permet avantageusement de protéger une partie du premier échangeur thermique 110 sans qu'il ne soit nécessaire d'ajouter un quelconque moyen de protection.

Ainsi, tel qu'illustré sur la figure 3, on note qu'une projection dont la trajectoire 200 est tangente au conduit d'air 140 est déviée par le moyen de protection 111 du premier échangeur thermique 110, et plus particulièrement par un sommet de ce moyen de protection 111, c'est-à-dire par une partie de ce moyen de protection 111 la plus éloignée de la route sur laquelle se déplace le véhicule. Autrement dit, toute projection qui rejoint le conduit d'air 140 et dont la trajectoire est susceptible de croiser le premier échangeur thermique 110 est déviée soit par le moyen de protection 111 du premier échangeur thermique 110, soit par le conduit d'air 140 lui-même, préservant ainsi l'intégrité du premier échangeur thermique 110 sans entraver le passage du flux d'air. Avantageusement, cette forme particulière du conduit d'air 140, avec une section d'entrée réduite formant étranglement et un évasement progressif dans la continuité, permet de réduire les dimensions du moyen de protection 111 du premier échangeur thermique 110. Tel que représenté, le premier échangeur thermique 110 comprend donc une première partie 112 qui est protégée des projections par le conduit d'air 140 et une deuxième partie 113 qui est quant à elle protégée des projections par l'autre grille ou par un renforcement des tubes ou des plaques formant la zone d'échange de chaleur de ce premier échangeur thermique.

Selon l'exemple illustré sur la figure 3, la grille de protection 136 du deuxième échangeur thermique 120 participe à former la zone centrale 131 du cadre 130. Autrement dit, selon cet exemple, cette grille de protection 136 s'étend dans le prolongement des renforts 135 et elle est ainsi agencée en aval du premier échangeur thermique 110 et en amont du deuxième échangeur thermique 120. Toutefois, cet exemple n'est pas limitatif et on pourra par exemple prévoir que la grille de protection soit avancée par rapport au deuxième échangeur thermique et ainsi par exemple être positionnée dans le prolongement du moyen de protection du premier échangeur thermique, c'est-à-dire en amont, à la fois, de ce premier échangeur thermique et du deuxième échangeur thermique.

La figure 4 illustre enfin, vu de face, un exemple de réalisation du cadre 130 qui porte les échangeurs thermiques de l'ensemble de refroidissement selon l'invention.

Tel qu'évoqué ci-dessus, le cadre 130 comprend au moins deux montants horizontaux 134 et au moins deux montant verticaux 137. Selon un exemple illustré sur cette figure 4, les montants horizontaux 134 sont plus longs que les montants verticaux 137 de sorte que le cadre 130 présente une forme générale rectangulaire. Bien entendu il ne s'agit que d'un exemple de réalisation qui ne saurait limiter l'invention. Les montants verticaux 137 portent des éléments de fixation 138 configurés pour permettre la fixation du cadre 130 à la face avant du véhicule tel qu'illustré sur la figure 1. Ces montants verticaux 137 portent également, chacun, au moins une patte de fixation 147 configurée pour permettre la fixation du premier échangeur thermique ou du deuxième échangeur thermique, selon le côté du cadre 130 concerné.

Chaque montant horizontal 134 porte au moins l'un des moyens de fixation 139 qui permettent la fixation du conduit d'air au cadre 130 tel que précédemment décrit. Selon l'exemple illustré ici, chaque montant horizontal 134 présente trois moyens de fixation 139 du conduit d'air régulièrement répartis le long du montant horizontal 134 concerné.

Par ailleurs, le cadre 130 comprend les renforts 135 précédemment mentionnés, et plus particulièrement deux renforts 135, qui s'étendent entre les deux montants horizontaux 134, perpendiculairement à ces montants horizontaux 134. Autrement dit, ces deux renforts 135 sont des renforts verticaux. Il est entendu qu'il ne s'agit que d'un exemple de réalisation et que ces deux renforts 135 pourraient présenter une orientation différente sans sortir du contexte de la présente invention. Tel qu'évoqué ci-dessus en référence à la figure 3, ces renforts 135 sont agencés dans la zone centrale du cadre 130. Cette zone centrale du cadre 130 comprend également des organes de rigidification 142 qui s'étendent, respectivement, entre un montant vertical 137 et un montant horizontal 134 adjacents. Selon l'exemple illustré sur la figure 4, le cadre 130 comprend quatre organes de rigidification 142 respectivement agencés à chacun des angles du cadre 130, c'est-à-dire au niveau de chaque jonction entre un montant vertical 137 et un montant horizontal 134. Ces organes de rigidification 142 rigidifient la structure du cadre 130, c'est-à-dire qu'ils la rendent plus résistante aux contraintes mécaniques qu'elle est amenée à subir lors de son utilisation, ces contraintes mécaniques étant notamment dues aux déplacements du véhicule auquel l'ensemble de refroidissement selon l'invention est destiné à être intégré.

Tel que cela a été évoqué précédemment, le cadre 130 comprend également la grille de protection 136 du deuxième échangeur thermique, et plus particulièrement la grille de protection 136 de la portion du deuxième échangeur thermique qui s'étend au-delà du premier échangeur thermique. La grille de protection 136 forme un ensemble monobloc avec le cadre 130. Avantageusement, on pourra prévoir que les renforts 135 verticaux, les montants horizontaux 134, les montants verticaux 137 et les organes de rigidification 142 forment également, avec le cadre 130 et la grille de protection 136, un ensemble monobloc, c'est-à-dire un unique ensemble qui ne peut être séparé sans entraîner la détérioration d'au moins l'un de ces éléments. Selon un exemple de réalisation de la présente invention, les renforts 135, les montants horizontaux et verticaux 134, 137, les organes de rigidification 142 et la grille de protection 136 du deuxième échangeur thermique sont issus de matière, c'est-à-dire que ces éléments sont réalisés dans un unique matériau. Alternativement, la grille de protection 136 du deuxième échangeur thermique peut être réalisée dans un matériau différent, le cadre 130 étant alors par exemple réalisé grâce à un procédé de bi-injection. Il est entendu qu'il ne s'agit que d'exemples de réalisation et que tout autre procédé permettant d'arriver à un cadre 130 monobloc, tel que décrit ici, est envisageable sans sortir du contexte de la présente invention.

La grille de protection 136 du deuxième échangeur thermique est formée, selon l'exemple illustré sur la figure 4, d'une pluralité de barreaux 143 horizontaux, c'est-à-dire des barreaux 143 qui s'étendent parallèlement aux montants horizontaux 134 du cadre 130, séparés les uns des autres par des espaces 144. Tel que représenté, ces barreaux 143 sont ainsi parallèles entre eux et s'étendent depuis l'un des montants verticaux 137 jusqu'à l'autre. Avantageusement, chaque barreau 143 présente une dimension équivalente, ou sensiblement équivalente à une dimension des tubes ou des plaques qui forment la zone d'échange de chaleur du deuxième échangeur thermique et les espaces 144 ménagés entre ces barreaux 143 présentent quant à eux des dimensions équivalentes ou sensiblement équivalentes aux dimensions des espaces ménagés entre ces tubes ou ces plaques du deuxième échangeur thermique. De la sorte, chaque barreau 143 de la grille de protection 136 est agencé en regard de l'un de ces tubes ou plaques du deuxième échangeur thermique, et plus particulièrement en amont de ceux-ci afin de les protéger efficacement contre les éventuelles projections qui leur seraient dommageables.

Tel que précédemment évoqué, les renforts 135 verticaux s'étendent quant à eux depuis l'un des montants horizontaux 134 jusqu'à l'autre de ces montants horizontaux 134. Ces deux renforts 135 sont identiques et comprennent, respectivement, deux poutres verticales 145 parallèles reliées entre elles par des traverses 146, formant ainsi un treillis. Ces renforts 135 étant identiques, les références portées sur l'un sont directement transposables à l'autre. On note toutefois que les traverses 146 ne s'étendent pas sur toute la hauteur des poutres verticales 145, le terme « hauteur » devant ici être entendu comme la plus grande dimension de ces poutres verticales 145. Ainsi, les renforts 135 sont dépourvus de traverses 146 au niveau de la grille de protection 136. En revanche, les poutres verticales 145 de ces renforts 135 forment des ponts de matière entre les barreaux 143 de la grille de protection 136.

Deux des organes de rigidification 142 s'étendent également à travers la grille de protection 136, formant ainsi d'autres ponts de matière entre les barreaux 143 de cette grille de protection 136.

On comprend de ce qui précède que les renforts 135 et les organes de rigidification 142 du cadre 130 permettent avantageusement de renforcer la structure de la grille de protection 136, cette grille de protection 136 servant quant à elle également à rigidifier la structure globale du cadre 130.

Ainsi, la présente invention propose un moyen simple et peu coûteux qui permet de protéger efficacement les échangeurs thermiques d'un ensemble de refroidissement agencé en face avant d'un véhicule et donc sujet à d'éventuelles projections, par exemple de gravillons, ou d'autres élément qui peuvent se trouver sur la route et être projetés par le déplacement du véhicule qui intègre un tel ensemble de refroidissement.

La présente invention ne saurait toutefois se limiter aux configurations décrits et illustrés ici. En particulier, la forme, et la disposition de la grille de protection, du cadre, du premier échangeur thermique et du deuxième échangeur thermique peuvent être modifiées dans le cadre de protection comme défini par les revendications.

## Revendications

1. Ensemble de refroidissement (100) pour un véhicule (2) automobile, comprenant au moins un premier échangeur thermique (110) s'étendant principalement dans un premier plan (P1), au moins un deuxième échangeur thermique (120) s'étendant principalement dans un deuxième plan (P2) et au moins une grille de protection (136) du deuxième échangeur thermique (120), le premier échangeur thermique (110) et/ou le deuxième échangeur thermique (120) étant portés par un cadre (130), **caractérisé en ce que** l'au moins une grille de protection (136) du deuxième échangeur thermique (120) forme une pièce monobloc avec le cadre (130).

2. Ensemble de refroidissement (100) selon la revendication précédente, dans lequel le premier échangeur thermique (110) et le deuxième échangeur thermique (120) sont tous deux traversés par un même flux d'air (FA), le premier échangeur thermique (110) étant agencé en amont du deuxième échangeur thermique (120) par rapport à un sens de circulation de ce flux d'air (FA), dans lequel au moins une portion (121) du deuxième échangeur thermique (120) s'étend au-delà du premier échangeur thermique (110) dans le deuxième plan (P2) d'extension principal du deuxième échangeur thermique (120) et dans lequel la grille de protection (136) du deuxième échangeur thermique (120) s'étend en regard de la portion (121) du deuxième échangeur thermique (120) qui s'étend au-delà du premier échangeur thermique (110).

3. Ensemble de refroidissement (100) selon la revendication précédente, dans lequel la grille de protection (136) présente des dimensions au moins identiques aux dimensions de la portion (121) du deuxième échangeur thermique (120) qui s'étend au-delà du premier échangeur thermique (110).

4. Ensemble de refroidissement (100) selon l'une quelconque des revendications 2 ou 3, dans lequel au moins le deuxième échangeur thermique (120) comprend une zone d'échange de chaleur (11) formée par un empilement de tubes ou de plaques, cette zone d'échange de chaleur (11) étant configurée pour être traversée par le flux d'air (FA) et dans lequel la grille de protection (136) comprend une pluralité de barreaux (143) qui s'étendent, chacun, en regard de l'un de ces tubes ou de l'une de ces plaques de la zone d'échange de chaleur (11) du deuxième échangeur thermique (120).

5. Ensemble de refroidissement (100) selon l'une quelconque des revendications précédentes, comprenant au moins un moyen de protection (111) du premier échangeur thermique (110).

6. Ensemble de refroidissement (100) selon l'une quelconque des revendications précédentes, dans lequel le cadre (130) comprend au moins une zone centrale (131) qui s'étend dans un troisième plan (P3) parallèle au premier plan (P1) d'extension principal du premier échangeur thermique (110) et au deuxième plan (P2) d'extension principal du deuxième échangeur thermique (120), la grille de protection (136) du deuxième échangeur thermique (120) formant une partie de cette zone centrale (131).

7. Ensemble de refroidissement (100) selon la revendication précédente, dans lequel le cadre (130) comprend au moins une première patte de fixation (147) configurée pour permettre la fixation du premier échangeur thermique (110) et au moins une deuxième patte de fixation (147) configurée pour permettre la fixation du deuxième échangeur thermique (120), l'au moins une première patte de fixation (147) et l'au moins une deuxième patte de fixation (147) étant réparties de part et d'autre de la zone centrale (131) du cadre (130).

8. Ensemble de refroidissement (100) selon l'une quelconque des revendications 6 ou 7, dans lequel la zone centrale (131) du cadre (130) comprend au moins deux renforts (135), le premier échangeur thermique (110) et le deuxième échangeur thermique (120) étant tous deux agencés en regard ces renforts (135).

9. Ensemble de refroidissement (100) selon la revendication précédente, dans lequel la grille de protection (136) du deuxième échangeur thermique (120), le cadre (130) et les deux renforts (135) forment un ensemble monobloc.

10. Véhicule (2) automobile comprenant au moins une face avant (1) et au moins un ensemble de refroidissement (100) selon l'une quelconque des revendications précédentes, l'ensemble de refroidissement (100) étant agencé dans la face avant (1) du véhicule (2).

## Patentansprüche

1. Kühlungsbaugruppe (100) für ein Kraftfahrzeug (2), umfassend wenigstens einen ersten Wärmetauscher (110), der sich hauptsächlich in einer ersten Ebene (P1) erstreckt, wenigstens einen zweiten Wärmetauscher (120), der sich hauptsächlich in einer zweiten Ebene (P2) erstreckt, und wenigstens ein Schutzgitter (136) des zweiten Wärmetauschers (120), wobei der erste Wärmetauscher (110) und/oder der zweite Wärmetauscher (120) von einem Rahmen (130) getragen werden, **dadurch gekennzeichnet, dass** das wenigstens eine Schutzgitter (136) des zweiten Wärmetauschers (120) ein einstückiges Teil mit dem Rahmen (130) bildet.

2. Kühlungsbaugruppe (100) nach dem vorhergehenden Anspruch, wobei sowohl der erste Wärmetauscher (110) als auch der zweite Wärmetauscher (120) von ein und demselben Luftstrom (FA) durchströmt werden, wobei der erste Wärmetauscher (110) stromauf des zweiten Wärmetauschers (120) bezogen auf eine Strömungsrichtung dieses Luftstroms (FA) angeordnet ist, wobei sich wenigstens ein Teilbereich (121) des zweiten Wärmetauschers (120) über den ersten Wärmetauscher (110) hinaus in der zweiten Haupterstreckungsebene (P2) des zweiten Wärmetauschers (120) erstreckt und wobei sich das Schutzgitter (136) des zweiten Wärmetauschers (120) gegenüber dem Teilbereich (121) des zweiten Wärmetauschers (120) erstreckt, der sich über den ersten Wärmetauscher (110) hinaus erstreckt.

3. Kühlungsbaugruppe (100) nach dem vorhergehenden Anspruch, wobei das Schutzgitter (136) Abmessungen aufweist, die wenigstens zu den Abmessungen des Teilbereichs (121) des zweiten Wärmetauschers (120) identisch sind, der sich der sich über den ersten Wärmetauscher (110) hinaus erstreckt.

4. Kühlungsbaugruppe (100) nach einem der Ansprüche 2 oder 3, wobei wenigstens der zweite Wärmetauscher (120) einen Wärmeaustauschbereich (11) aufweist, der von einem Stapel aus Rohren oder Platten gebildet ist, wobei dieser Wärmeaustauschbereich (11) dazu ausgebildet ist, von dem Luftstrom (FA) durchströmt zu werden, und wobei das Schutzgitter (136) eine Mehrzahl von Stäben (143) umfasst, die sich jeweils gegenüber einem dieser Rohre oder einer dieser Platten des Wärmeaustauschbereichs (11) des zweiten Wärmetauschers (120) erstrecken.

5. Kühlungsbaugruppe (100) nach einem der vorhergehenden Ansprüche, umfassend wenigstens ein Mittel zum Schutz (111) des ersten Wärmetauschers (110).

6. Kühlungsbaugruppe (100) nach einem der vorhergehenden Ansprüche, wobei der Rahmen (130) wenigstens einen Mittelbereich (131) umfasst, der sich in einer dritten Ebene (P3) parallel zur ersten Haupterstreckungsebene (P1) des ersten Wärmetauschers (110) und zur zweiten Haupterstreckungsebene (P2) des zweiten Wärmetauschers (120) erstreckt, wobei das Schutzgitter (136) des zweiten Wärmetauschers (120) einen Abschnitt dieses Mittelbereichs (131) bildet.

7. Kühlungsbaugruppe (100) nach dem vorhergehenden Anspruch, wobei der Rahmen (130) wenigstens eine erste Befestigungslasche (147), die dazu ausgebildet ist, die Befestigung des ersten Wärmetauschers (110) zu ermöglichen, und wenigstens eine zweite Befestigungslasche (147), die dazu ausgebildet ist, die Befestigung des zweiten Wärmetauschers (120) zu ermöglichen, umfasst, wobei die wenigstens eine erste Befestigungslasche (147) und die wenigstens eine zweite Befestigungslasche (147) beiderseits des Mittelbereichs (131) des Rahmens (130) verteilt sind.

8. Kühlungsbaugruppe (100) nach einem der Ansprüche 6 oder 7, wobei der Mittelbereich (131) des Rahmens (130) wenigstens zwei Verstärkungen (135) umfasst, wobei sowohl der erste Wärmetauscher (110) als auch der zweite Wärmetauscher (120) gegenüber diesen Verstärkungen (135) angeordnet sind.

9. Kühlungsbaugruppe (100) nach dem vorhergehenden Anspruch, wobei das Schutzgitter (136) des zweiten Wärmetauschers (120), der Rahmen (130) und die zwei Verstärkungen (135) eine einstückige Anordnung bilden.

10. Kraftfahrzeug (2) umfassend wenigstens eine Vorderseite (1) und wenigstens eine Kühlungsbaugruppe (100) nach einem der vorhergehenden Ansprüche, wobei die Kühlungsbaugruppe (100) in der Vorderseite (1) des Fahrzeugs (2) angeordnet ist.

## Claims

1. Cooling assembly (100) for a motor vehicle (2), comprising at least one first heat exchanger (110) mainly extending in a first plane (P1), at least one second heat exchanger (120) mainly extending in a second plane (P2) and at least one protective grid (136) for protecting the second heat exchanger (120), the first heat exchanger (110) and/or the second heat exchanger (120) being supported by a frame (130), **characterized in that** the at least one protective grid (136) for protecting the second heat exchanger (120) forms a one-piece part with the frame (130).

2. Cooling assembly (100) according to the preceding claim, wherein the first heat exchanger (110) and the second heat exchanger (120) are both passed through by the same air flow (AF), the first heat exchanger (110) being arranged upstream of the second heat exchanger (120) relative to a direction of circulation of this air flow (AF), wherein at least one portion (121) of the second heat exchanger (120) extends beyond the first heat exchanger (110) in the second plane (P2) of main extension of the second heat exchanger (120) and wherein the protective grid (136) for protecting the second heat exchanger (120) extends opposite the portion (121) of the second heat exchanger (120) that extends beyond the first heat exchanger (110).

3. Cooling assembly (100) according to the preceding claim, wherein the dimensions of the protective grid (136) are at least identical to the dimensions of the portion (121) of the second heat exchanger (120) that extends beyond the first heat exchanger (110).

4. Cooling assembly (100) according to either one of Claims 2 and 3, wherein at least the second heat exchanger (120) comprises a heat exchange zone (11) formed by a stack of tubes or of plates, with this heat exchange zone (11) being configured to be passed through by the air flow (AF) and wherein the protective grid (136) comprises a plurality of bars (143) that each extend opposite one of these tubes or one of these plates of the heat exchange zone (11) of the second heat exchanger (120).

5. Cooling assembly (100) according to any one of the preceding claims, comprising at least one means (111) for protecting the first heat exchanger (110).

6. Cooling assembly (100) according to any one of the preceding claims, wherein the frame (130) comprises at least one central zone (131) that extends in a third plane (P3) parallel to the first plane (P1) of main extension of the first heat exchanger (110) and to the second plane (P2) of main extension of the second heat exchanger (120), with the protective grid (136) for protecting the second heat exchanger (120) forming part of this central zone (131).

7. Cooling assembly (100) according to the preceding claim, wherein the frame (130) comprises at least one first attachment bracket (147) configured to allow the first heat exchanger (110) to be attached and comprises at least one second attachment bracket (147) configured to allow the second heat exchanger (120) to be attached, the at least one first attachment bracket (147) and the at least one second attachment bracket (147) being distributed on either side of the central zone (131) of the frame (130).

8. Cooling assembly (100) according to either one of Claims 6 and 7, wherein the central zone (131) of the frame (130) comprises at least two reinforcements (135), the first heat exchanger (110) and the second heat exchanger (120) both being arranged opposite these reinforcements (135).

9. Cooling assembly (100) according to the preceding claim, wherein the protective grid (136) for protecting the second heat exchanger (120), the frame (130) and the two reinforcements (135) form a one-piece assembly.

10. Motor vehicle (2) comprising at least one front face (1) and at least one cooling assembly (100) according to any one of the preceding claims, the cooling assembly (100) being arranged in the front face (1) of the vehicle (2) .
